# EUROPEAN PATENT APPLICATION

(11) **EP 1 818 740 A2**
(43) Date of publication of application: **15.08.2007**
(21) Application number: 07101177.9
(22) Date of filing: 25.01.2007
(51) Int. Cl.: G04G 9/12

(54) **Time display apparatus and method**

(30) Priority: 09.02.2006 KR 20060012342
(71) Applicant: Samsung Electronics Co., Ltd., Suwon-si, Gyeonggi-Do (KR)
(72) Inventor: HONG, Hye Mi, Seoul (KR); HONG, Nho Kyung, Seoul (KR); YOUN, Su Jung, Gyeonggi-do (KR); CHOI, Hee Woong, Seoul (KR); IM, You Jin, Seoul (KR)
(74) Representative: Zimmer, Franz-Josef

(57) **Abstract**

A time display apparatus and method are disclosed. The time display apparatus includes a digit symbol memory for storing digit symbols representing both numerical time values and the passage of time; a symbol color memory for storing digit color information to change colors of time values; a time counter for measuring the time; a controller for determining digit symbols suitable for display of a current time value and associated color information, and for outputting a time display control signal; an image processor for generating a current time representation image using the determined digit symbols and associated color information, and for outputting an image change signal to represent the passage of time in a time unit less than a minimum time unit of the current time representation image; and a display unit for displaying a current time value according to the current time representation image and image change signal.

## Description

### BACKGROUND OF THE INVENTION

### 1. Field of the Invention

The present invention relates generally to a time display apparatus and method and, more particularly, to a time display apparatus and method for a mobile phone wherein time values are displayed in a readily understandable manner and the passage of time can be easily and conveniently recognized.

### 2. Description of the Related Art

Time values are represented differently in digital and analog clocks. In a digital clock, hours and minutes are represented in numbers. While it maybe easy to represent time values in a digital clock, it may be difficult to intuitively recognize the passing of time over a particular minute.

In an analog clock, the hour and minute hands rotate on the clock dial to indicate time values. While it may be easy to recognize the passing of time over a particular minute in an analog clock, it may be difficult to recognize the current time value at a glance.

That is, a digital time representation and an analog time representation both have their respective advantages and disadvantages.

Hence, it is necessary to provide a time display method wherein time values are displayed in an unambiguous and readily understandable manner and the passage of time can be easily recognized.

### SUMMARY OF THE INVENTION

The present invention has been made in view of at least the above problems, and an aspect of the present invention is to provide a time display apparatus and method that enable the user to readily and unambiguously recognize the current time.

Another aspect of the present invention is to provide a time display apparatus and method that enable the user to identify the passage of time.

Another aspect of the present invention is to provide a time display apparatus and method that enable the user to easily recognize changes of time.

In accordance with the present invention, there is provided a time display apparatus that includes a digit symbol memory for storing digit symbols capable of representing both numerical time values and the passage of time; a symbol color memory for storing digit color information to change with the passage of time colors of time values represented by the digit symbols; a time counter for measuring the time; a controller for selecting digit symbols suitable for display of a current time value and associated color information from the digit symbol memory and symbol color memory, and for outputting a time display control signal; an image processor for generating in response to the time display control signal a current time representation image using the selected digit symbols and associated color information, and for outputting an image change signal to represent the passage of time in a time unit less than a minimum time unit for time display through the current time representation image; and a display unit for receiving the current time representation image and image change signal from the image processor, and displaying a current time value.

In accordance with the present invention, there is provided a time display method that includes storing digit symbols capable of representing both numerical time values and the passage of time; storing digit color information to change with the passage of time colors of time values represented by the digit symbols; measuring the current time; selecting digit symbols suitable for display of a current time value from the stored digit symbols and associated color information from the stored digit color information; generating a current time representation image for current time display using the selected digit symbols and associated color information; outputting an image change signal to represent the passage of time in a time unit less than a minimum time unit for time display through the current time representation image; and displaying a current time value based on the current time representation image and image change signal.
Further advantages embodiments are according to the dependent claims.

### BRIEF DESCRIPTION OF THE DRAWINGS

The above and other objects, features and advantages of the present invention will be more apparent from the following detailed description in conjunction with the accompanying drawings, in which:
FIG. 1 illustrates a configuration of a time display apparatus according to the present invention;
FIG. 2 illustrates a digit symbol table for managing digit symbols representing time values in the time display apparatus of FIG. 1;
FIG. 3 illustrates a digit color assignment table for managing colors of digit symbols representing time values in the time display apparatus of FIG. 1;
FIG. 4 is a flow chart illustrating steps of a first time display method according to the present invention;
FIG. 5 is a flow chart illustrating steps of a second time display method according to the present invention;
FIG. 6 illustrates display screen representations of time values in the time display apparatus of FIG. 1;
FIGS. 7 and 8 illustrate representation of the passage of time in display of seconds in the time display apparatus of FIG. 1;
FIGS. 9 and 10 illustrate representation of the passage of time in display of minute values in the time display apparatus of FIG. 1; and
FIGS. 11 to 13 illustrate representation of hours in the time display apparatus of FIG. 1.

### DETAILED DESCRIPTION OF PREFERRED EMBODIMENTS

Hereinafter, preferred embodiments of the present invention are described in detail with reference to the accompanying drawings. The same reference symbols identify the same or corresponding elements in the drawings. Some constructions or processes known in the art may not be described to avoid obscuring the invention in unnecessary detail.

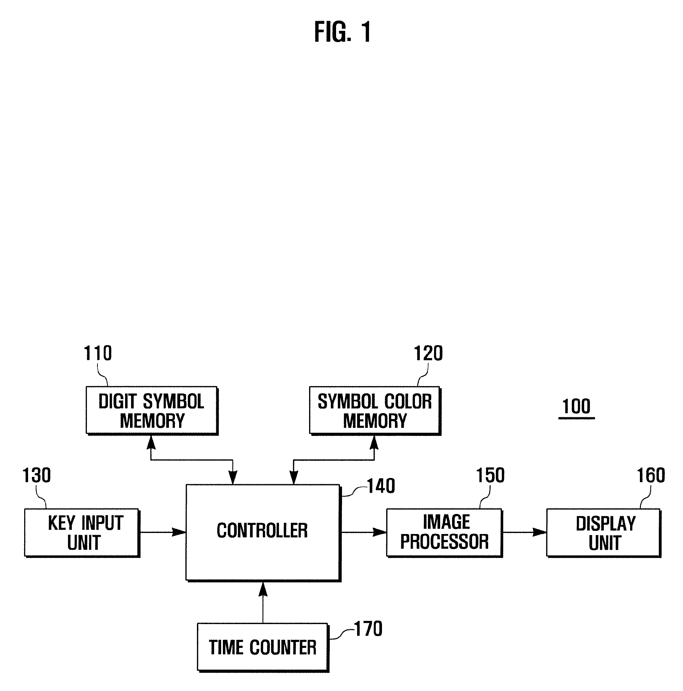

FIG. 1 illustrates a configuration of a time display apparatus according to the present invention.

Referring to FIG. 1, the time display apparatus 100 comprises a digit symbol memory 110, a symbol color memory 120, a key input unit 130, a controller 140, an image processor 150, a display unit 160, and a time counter 170.

The digit symbol memory 110 stores digit symbols for representing minute values. Preferably, the digit symbols are designed to represent both numeric minute values and the passage of time (for example, changes of seconds). A digit symbol may be composed of a plurality of digit elements (for example, circles or squares) one of which is selected in sequence and changed in different display states. A digit symbol may be composed of 15 rotating digit elements one of which is selected in sequence and changed stepwise or transitioned in color and shape during a two-second interval.

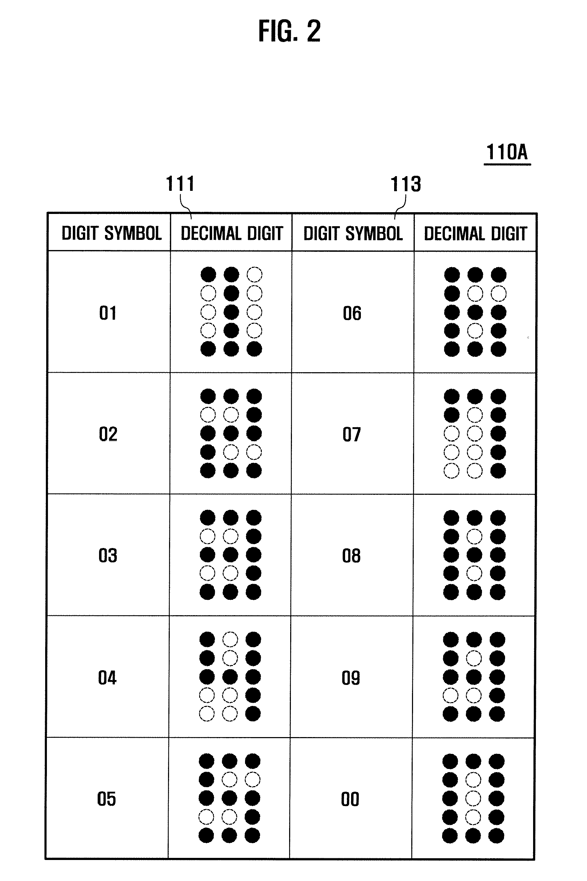

A data structure stored in the digit symbol memory 110 for managing the digit symbols is illustrated in FIG. 2.

The symbol color memory 120 stores digit color information for changing, in a stepwise manner over the passage of time, colors of numeric time values represented by the digit symbols. The digit color information includes information on colors assigned to a plurality of digit elements (for example, circles) representing time values. For a particular digit symbol, the digit color information may include information regarding colors assigned to those digit elements representing a particular time value (a value zone), to those digit elements forming a background for the time value (a background zone), and to one current digit element corresponding to the progress of time (an in-progress digit element), wherein the current digit element is complementary in color to the value zone for easy visibility.

The digit color information may further include information regarding colors distinguishing time-elapsed and time non-elapsed portions of a unit time period to more clearly represent the passage of time. For example, for a unit time period, the color information may include information regarding colors assigned to the time non-elapsed portion of a value zone, to the time non-elapsed portion of a background zone, to an in-progress digit element, to the time-elapsed portion of the value zone, or to the time-elapsed portion of the background zone.

The digit color information may further include information regarding colors assigned to exact minutes, for example the commencing second of a particular minute, to represent changes of minutes (namely, changeover point of a minute to another minute).

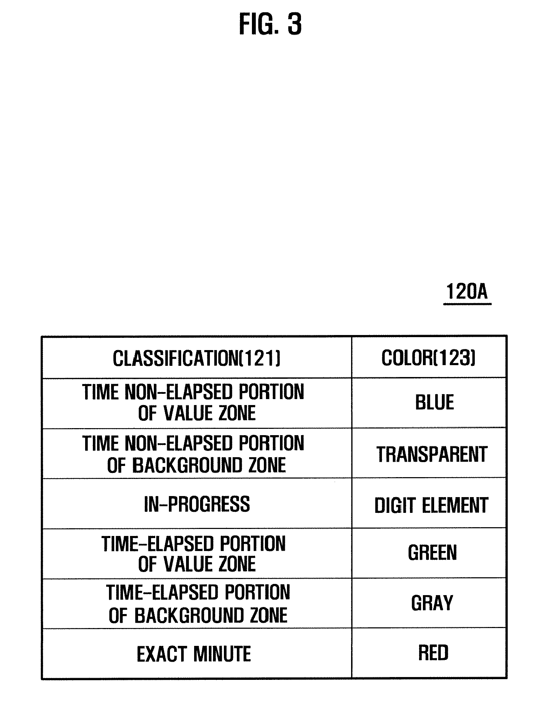

The digit color information maybe set or changed according to user selections. An example of the digit color information stored in the symbol color memory 120 is illustrated in FIG. 3.

The key input unit 130 receives a user command for control of the time display apparatus 100, and sends the user command to the controller 140. For example, the key input unit 130 preferably inputs user selections for setting or changing the digit color information and for setting a time display mode (for example, 12-hour or 24-hour clock notation), and sends the user selections to the controller 140.

The controller 140 controls the operation of the time display apparatus 100 on the basis of user commands input through the key input unit 130 or a pre-stored control algorithm. For example, the controller 140 preferably sets the digit color information and time display mode of the time display apparatus 100 according to user selections input through the key input unit 130.

Upon reception of current time information from the time counter 170, the controller 140 controls, using preset operation information, the image processor 150 to generate a corresponding current time representation image. To display a current time value, the controller 140 may select appropriate digit symbols and associated color information respectively from the digit symbol memory 110 and symbol color memory 120, and sends the selected digit symbols and color information to the image processor 150. The controller 140 may also output a time display control signal to the image processor 150. The controller 140 may further forward, in real time, current time information from the time counter 170 to the image processor 150 to change the current time representation image with the passage of time.

The image processor 150 generates a current time representation image for current time display under the control of the controller 140, and controls display of the display unit 160 on the basis of the current time representation image. For example, the image processor 150 produces a current time representation image using digit symbols and associated color information from the controller 140, and generates an image change signal to represent the progress of time in a time unit (for example, a second) less than the minimum time unit for time display (for example, a minute) through the current time representation image.

The image processor 150 selects in sequence one of the digit elements (for example, circles) representing a time value, and controls display of the selected digit element as a rotating image with the passage of time. The image processor 150 may receive current time information in real time via the controller 140 or directly from the time counter 170. In addition, the image processor 150 may store a number of variant images to make the selected digit element appear to be rotating. For example, the image processor 150 may store a number of elliptical images of different minor axes, and control display of the elliptical images so that they are displayed at regular time intervals within one second.

The display unit 160 displays a current time value using a current time representation image and image change signal from the image processor 150.

The time counter 170 measures the current time, and sends the measured current time value to the controller 140 or to the image processor 150.

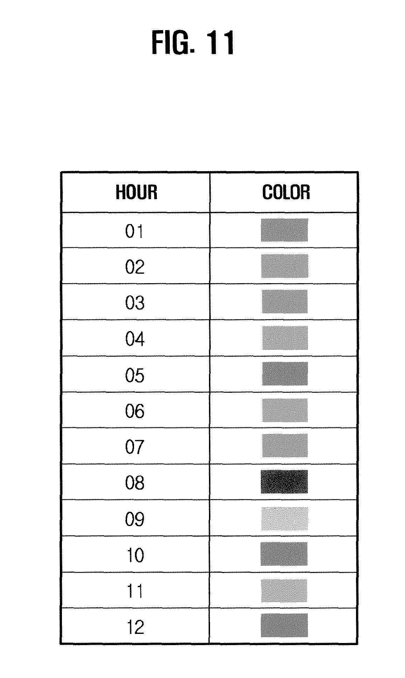

For easy recognition of changes of hours and schedule management according to hours, the time display apparatus assigns different colors to different hours. The time display apparatus 100 mayfurther include an hour color memory (not shown) for assigning desired colors to hours. An example of an hour color assignment stored in the hour color memory is illustrated in FIG. 11.

FIG. 2 illustrates a digit symbol table for managing digit symbols representing time values in the time display apparatus 100. Referring to FIG. 2, the digit symbol table 110A includes decimal digits 111 and corresponding digit symbols 113, wherein each digit symbol is composed of 15 digit elements corresponds to each decimal digit.

Because two decimal digits are necessary to represent minute values, a total of 30 digit elements are used to represent a particular minute value using the arrangement illustrated in FIG. 2. Hence, each digit element corresponds to two seconds in time. A 360-degree rotation of a digit element corresponds to the elapse of 2 seconds, and a 180-degree rotation of a digit element corresponds to the elapse of 1 second.

If a digit symbol were composed of 30 digit elements, a total of 60 digit elements would be necessary to represent a particular minute value. Hence, each digit element would correspond to one second in time, and a 360-degree rotation of a digit element would correspond to the elapse of 1 second.

FIG. 3 illustrates a digit color assignment table for managing colors of digit symbols representing time values in the time display apparatus 100.

Referring to FIG. 3, the digit color assignment table 120A includes classification fields 121 and color fields 123. Digit color information of the table 120A illustrates that, in a unit time interval of a particular minute value, a 'blue' color is assigned to the time non-elapsed portion of a value zone, a 'transparent' color is assigned to the time non-elapsed portion of a background zone, a 'purple' color is assigned to represent the passage of time, a 'green' color is assigned to the time-elapsed portion of the value zone, a 'gray' color is assigned to the time-elapsed portion of the background zone, and a 'red' color is assigned to represent exact minutes (changeover point of a minute to another minute).

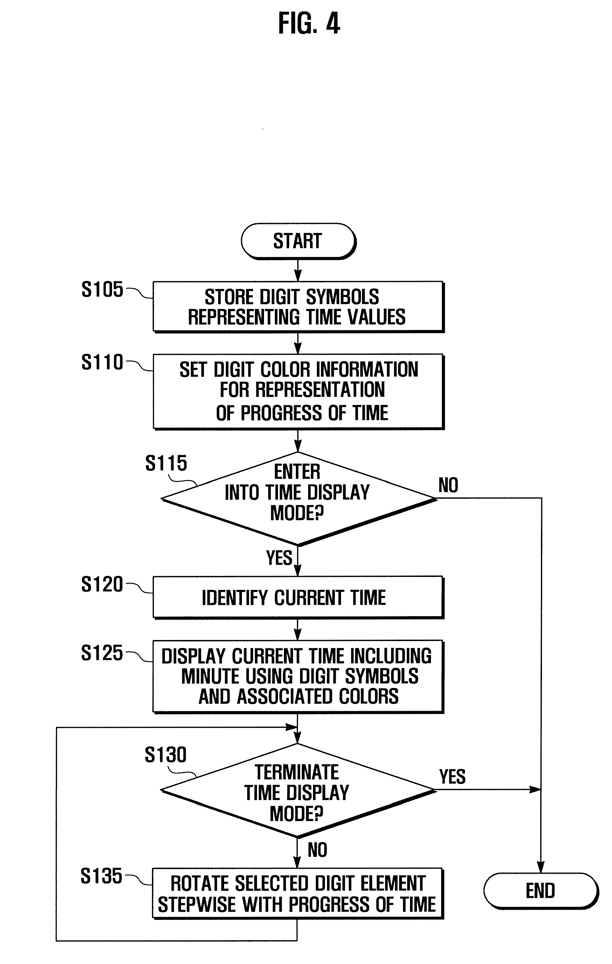

FIG. 4 is a flow chart illustrating a first time display method according to the present invention. Referring to FIGS. 1 and 4, the first time displaymethodwill be described.

The time display apparatus 100 begins by storing digit symbols for representing time values (S105). The digit symbols are designed to represent both numeric minute values and the passage of time (for example, changes of seconds). Preferably, each digit symbol is composed of a plurality of (for example, fifteen) digit elements. Examples of the digit symbols are illustrated in FIG. 2.

The time display apparatus 100 sets digit color information based on the passage of time (S110). The digit color information includes information on colors assigned to digit elements (for example, circles) of digit symbols. The digit color information may be set or changed according to user selections. An example of setting the digit color information is illustrated in FIG. 3.

After completion of setting the initial information regarding the digit symbols representing the time values, the time display apparatus 100 enters into a time display mode in response to, for example, a user selection (S115).

In the time display mode, the time display apparatus 100 identifies the current time (S120). The controller 140 may initiate the time counter 170 to measure the current time, and receives the measured current time value from the time counter 170.

The controller 140 displays a current time value through the display unit 160 (S125). The controller 140 may control the image processor 150 to create a current time representation image for the display of the minute part of the current time value using the digit symbols and associated colors set in steps S105 and S110. The image processor 150 then sends the created current time representation image to the display unit 160. The display unit 160 then displays the current time value with the minute part represented by the multiple digit elements.

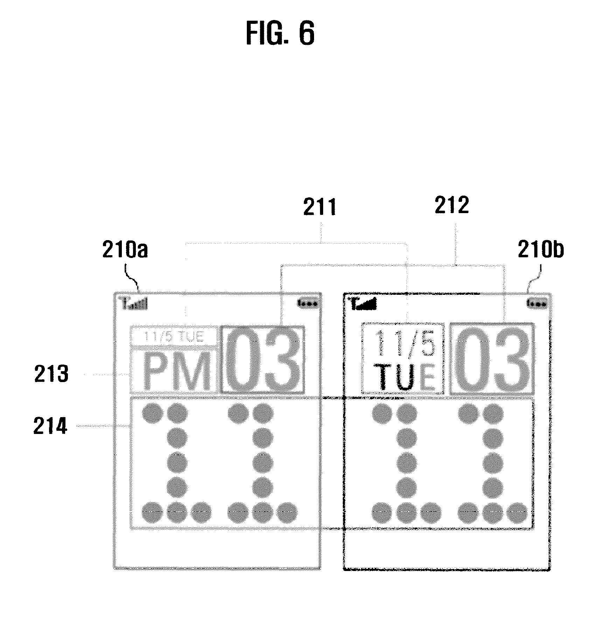

If the time display mode is not terminated (S130), the controller 140 changes the current time representation image displayed through the display unit 160 to represent the passage of time. That is, one of the multiple digit elements representing the minute part is selected and rotated according to the passage of time (S135). For example, when a digit symbol is composed of 15 digit elements as illustrated in FIG. 2, a particular minute value represented by two digit symbols is composed of 30 digit elements, and each digit element corresponds in time to two seconds. The controller 140 selects one of the 30 digit elements in sequence from the beginning, and rotates the selected digit element 360 degrees during 2 seconds. Rotation of digit elements along with the progress of time is described later in relation to FIGS. 6 to 10.

In the first time display method described above, the minute part of a current time value is represented by multiple (for example, thirty) digit elements, and a digit element is selected and rotated in order to represent the passage of time.

If three different colors (for example, for a value zone, background zone and in-progress digit element) are set at step S110, the colors of the value and background zones are not changed at step S135 and only the color and shape of one in-progress digit element is changed.

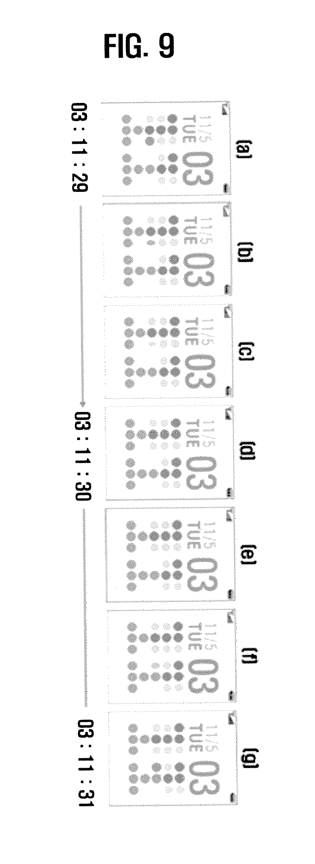

If five different colors (for example, for time-elapsed and time non-elapsed portions of a value zone, time-elapsed and time non-elapsed portions of a background zone, and in-progress digit element) are set at step S110, time-elapsed and time non-elapsed portions of the value zone, time-elapsed and time non-elapsed portions of the background zone and one in-progress digit element are changed in color and shape at step S135. In order to represent the passage of time, the use of digit symbols and associated five colors is illustrated in FIG. 9.

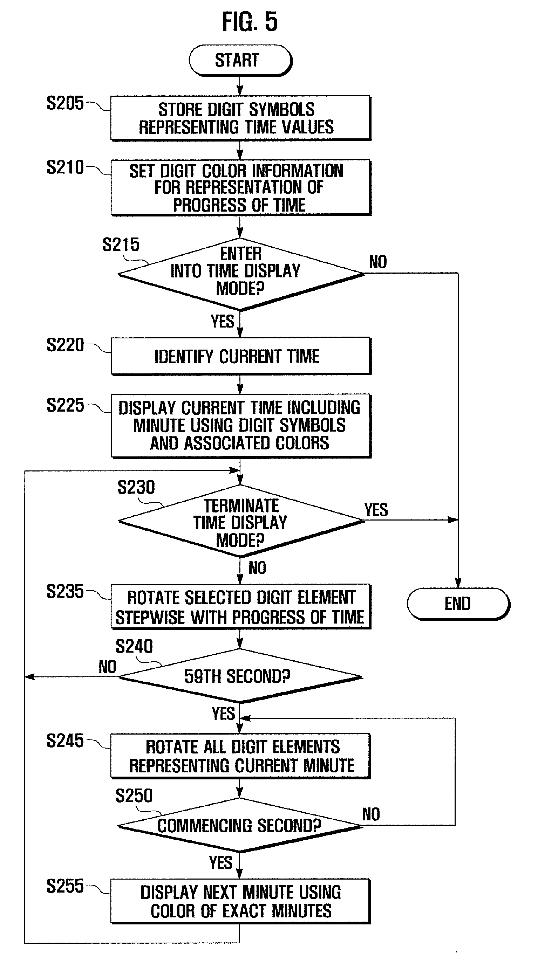

FIG. 5 is a flow chart illustrating a second time display method according to the present invention, wherein changes of minutes are more clearly represented. Referring to FIGS. 1 and 5, the second time display method will be described.

The time display apparatus 100 begins by storing digit symbols for representing time values (S205). The digit symbols are designed to represent both numeric minute values and the passage of time (for example, changes of seconds). Each digit symbol may be composed of a plurality of (for example, fifteen) digit elements. Examples of the digit symbols are illustrated in FIG. 2.

The time display apparatus 100 sets digit color information based on the passage of time (S210). The digit color information includes information on colors assigned to the digit elements (for example, circles) of the digit symbols. The digit color information may be set or changed according to user selections. An example setting of the digit color information is illustrated in FIG. 3.

After the completion of the setting of the initial information regarding the digit symbols representing the time values, the time display apparatus 100 enters into a time display mode in response to, for example, a user selection (S215).

In the time display mode, the time display apparatus 100 identifies the current time (S220). The controller 140 initiates the time counter 170 to measure the current time, and receives the measured current time value from the time counter 170.

The controller 140 displays the current time value through the display unit 160 (S225). The controller 140 controls the image processor 150 to create a current time representation image for display of the minute part of the current time value using the digit symbols and associated colors set at steps S205 and S210. The image processor 150 sends the created current time representation image to the display unit 160. The display unit 160 then displays the current time value with the minute part represented by multiple digit elements.

If the time display mode is not terminated (S230), the controller 140 changes the current time representation image displayed through the display unit 160 to represent the passage of time, through steps S235 to S255.

With the passage of time, the controller 140 selects in sequence one of the multiple digit elements representing the minute part, and rotates the selected digit element (S235). Step S235 is repeatedly performed during a time duration from the 01st second to the 59th second of a particular minute value. The image processor 150 determines colors of those digit elements representing the minute part using the digit color information (regarding colors assigned to time-elapsed and time non-elapsed portions of a value zone, to time-elapsed and time non-elapsed portions of a background zone, and to an in-progress digit element) set at step S210, and outputs to the display unit 160 a corresponding current time representation image based on the determined colors.

If the current second is equal to the 59th second of a minute value (S240), the controller 140 rotates all digit elements representing the minute part in a stepwise manner to clearly represent the changes of the minutes (S245). That is, whereas the controller 140 rotates a selected one of the digit elements representing the minute part during a time duration from the 01st second to the 59th second of a particular minute value, the controller 140 rotates all digit elements representing the minute part during a time duration from the 59th second of the minute value to the 01st second of the next minute value.

If the current second is equal to the commencing second of a next minute value (S250), the controller 140 displays digit symbols corresponding to the next minute value using the color of exact minutes set at step S210 (S255).

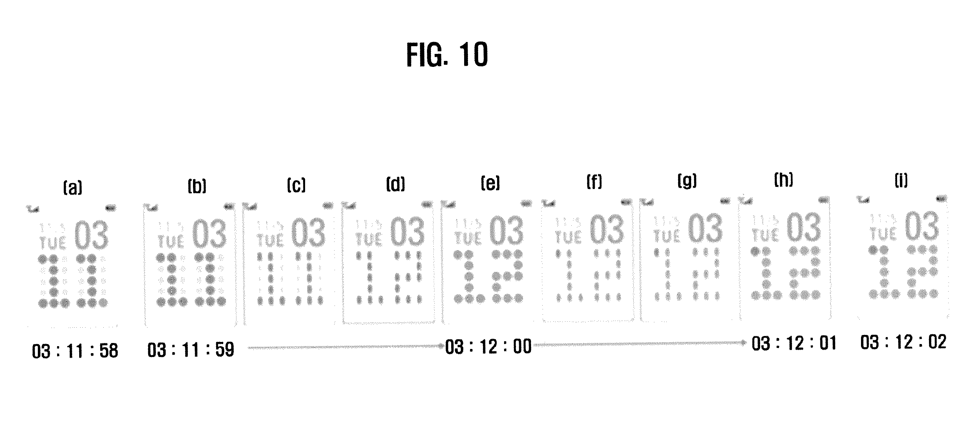

To clearly indicate a change of a minute, representation of the progress of time using six colors is illustrated in FIG. 10.

FIG. 6 illustrates display screen representations of time values in the time display apparatus. In FIG. 6, a 12-hour clock notation is used for a screen 210a, and a 24-hour clock notation is used for a screen 210b.

The screens 210a and 210b each include a day/date field 211, an hour field 212, and a minute field 214. The 12-hour clock screen 210a further includes an am/pm field 213.

In FIG. 6, the 12-hour clock screen 210a denotes 03:11 p.m. (hours:minutes), and the 24-hour clock screen 210b denotes 03:11 a.m.

In particular, minute values in the minute fields 214 are each represented by a plurality of circular digit elements.

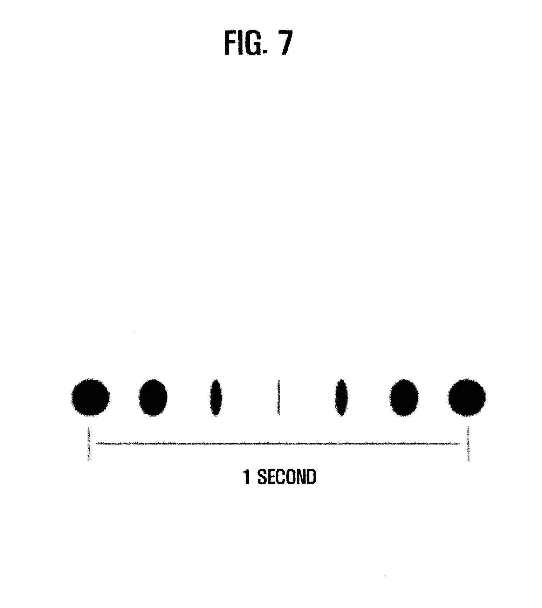

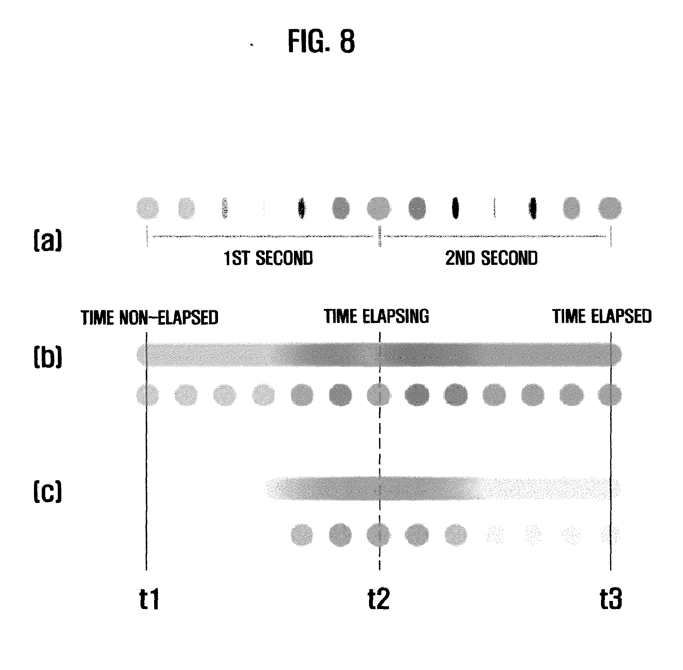

As described above, the minute part of a time value is represented by a plurality of digit elements, and the progress of time is represented by the rotation of the digit elements and is illustrated in FIGS. 7 and 8.

FIGS. 7 and 8 illustrate the representation of the passage of time in the display of seconds in the time display apparatus. FIG. 7 illustrates one of the digit elements rotating and representing the minute part during one second, and FIG. 8 illustrates a rotating digit element and color changes of digit elements during two seconds.

Referring to FIG. 7, an effect of digit element rotation is obtained through the use of multiple image elements in one second. In particular in FIG. 7, six image elements are used to produce a rotation effect of a digit element, and the image elements are displayed in sequence at an interval of 1/6 second.

FIG. 8 illustrates changes of digit symbols shown in FIG. 2 and associated colors. Diagram (a) of FIG. 8 illustrates the rotation of one of the digit elements representing the minute part of a time value along with color changes during two seconds; diagram (b) of FIG. 8 illustrates color changes of one of the digit elements forming a value zone; and diagram (c) of FIG. 8 illustrates color changes of one of the digit elements forming a background zone.

Using the information regarding the multiple digit symbols and the associated colors, the changes of the individual digit elements representing the minute part of a time value during a unit of time duration (for example, two seconds) can be identified in FIG. 8.

FIGS. 9 and 10 illustrate a representation of the passage of time in a display of minute values using the digit color information of FIG. 3. FIGS. 9 and 10 illustrate the display of minute values with the passage of time using five and six colors, respectively.

FIG. 9 illustrates the display of minute values from 03:11:29 (hours:minutes:seconds) to 03:11:31. Referring to FIGS. 3 and 9, examples of the display of minutes are described below.

In diagram (a) of FIG. 9, the first to fourteenth digit elements (beginning from the top left) of the thirty circular digit elements representing a minute value of 11 are green or gray, indicating that they belong to the time-elapsed portion of the minute value of 11. The fifteenth digit element is purple, indicating that it is the in-progress digit element. This interpretation is based on the digit color assignment table 120A of FIG. 3, and the time value shown in diagram (a) of FIG. 9 is 03:11:29 exactly.

In diagram (b) of FIG. 9, the fifteenth digit element remains purple in color and becomes oval in shape. This indicates that the time is passing from 03:11:29 to 03:11:30. Further, retention of the purple color indicates that the current second value is closer to the 29th second than to the 30th second (for example, about 29 and 1/4 seconds).

In diagram (c) of FIG. 9, the fifteenth digit element remains oval in shape and becomes gray in color. This indicates that the current second value has not yet reached the 30th second. Further, the gray color indicates that the current second value is closer to the 30th second than to the 29th second (for example, about 29 and 3/4 seconds).

In diagram (d) of FIG. 9, the fifteenth digit element remains gray in color and becomes circular in shape. This indicates that the current second value is exactly the 30th second.

Diagrams (e) and (f) of FIG. 9 illustrate a state where the time passes from 03:11:30 to 03:11:31. In diagram (e) of FIG. 9, the sixteenth digit element is not changed in color and becomes oval in shape, indicating that the current second value is closer to the 30th second than to the 31st second (for example, about 30 and 1/4 seconds). In diagram (f) of FIG. 9, the sixteenth digit element remains oval in shape and becomes purple in color, indicating that the current second value is closer to the 31st second than to the 30th second (for example, about 30 and 3/4 seconds).

In diagram (g) of FIG. 9, the sixteenth digit element is purple in color and becomes circular in shape, indicating that the time value is exactly 03:11:31.

As described above, during display of the time value of 03:11, the user can intuitively recognize the amount of passage in time between 03: 11 and 03:12 through time display screens as illustrated in diagrams (a) through (g) of FIG. 9.

FIG. 10 illustrates display of minute values from 03:11:58 (hours:minutes:seconds) to 03:12:02. Referring to FIGS. 3 and 10, examples of display of minute values are described below. The description given to time display screens of FIG. 9 is also applicable to those of FIG. 10, and a repeated description is omitted.

The time values are 03:11:58 in diagram (a) of FIG. 10 and 03:11:59 in diagram (b) of FIG. 10. Description of the passage of time from the 58th second to the 59th second is similar to that given in relation to FIG. 9, and is omitted.

Diagrams (b) to (e) of FIG. 10 illustrate a state where the time passes from 03:11:59 to 03:12:00. Diagram (b) of FIG. 10 displays a time value of 03:11:59; diagrams (c) and (d) of FIG. 10 illustrate a transition from the 59th second to the commencing second; and diagram (e) of FIG. 10 displays a time value of exactly 03:12:00.

For a clear representation of the changes of the minutes, in diagrams (c) and (d) of FIG. 10, all of the digit elements are oval; and in diagram (e) of FIG. 10, the minute value is displayed in the color of 'red' assigned to the exact minutes.

This is also applied to a transition from 03:12:00 to 03:12:01. That is, in the case of a transition from the commencing second to the 01st second as illustrated in diagrams (f) and (g) of FIG. 10, not only the first digit element becomes purple in color but also all digit elements become oval in shape then circular, for a clear representation of the changes of the minutes in a manner similar to that of diagrams (c) and (d) of FIG. 10.

Accordingly, the user can readily recognize the transition from 03: 11 and 03:12 through time display screens shown in diagrams (a) through (i) of FIG. 10.

FIGS. 11 to 13 illustrate representation of hours in the time display apparatus.

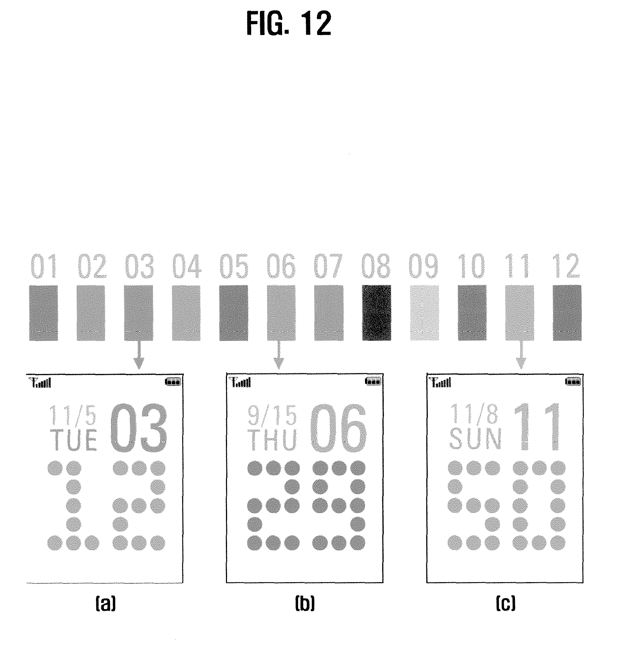

FIG. 11 shows an example of hour color assignment stored in the hour color memory (not shown) of the time display apparatus in FIG. 1, appropriate for a 12-hour clock notation. If different colors are assigned to hours, the time display apparatus displays the time values corresponding the colors in the event of a change of hours, as illustrated in FIG. 12. Thereby the user can clearly recognize changes of hours.

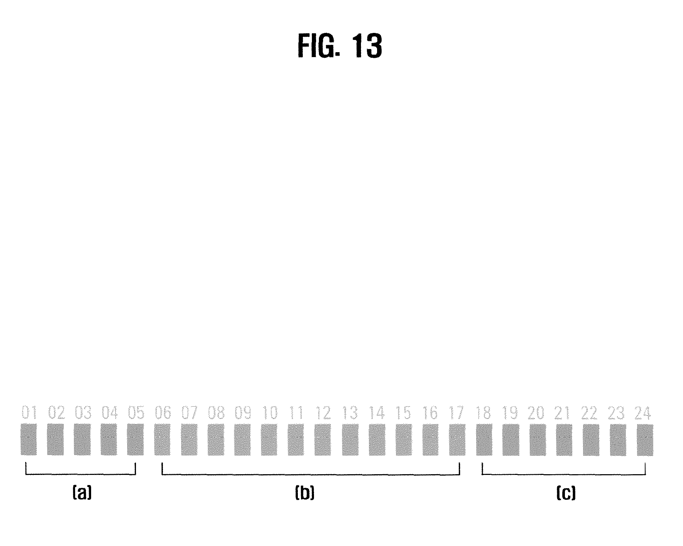

For personal schedule management, the colors can be assigned to bands of hours. As illustrated in FIG. 13, a single color is assigned to a band of multiple hours.

For example, a user on a diet assigns a 'yellowish green' color to a band of hours when the user can eat freely, and assigns a 'pink' color to another band of hours when the user should be moderate in eating. Thereby assignment of colors to hours facilitates a diet schedule management.

As apparent from the above description, the present invention provides a time display apparatus and method wherein a plurality of digit elements are used to display the minute part of a time value and a digit element are selected in sequence and rotated. Thereby not only an accurate time value is readily recognizable but also the passage of time can be identified. In addition, different colors can be assigned to different hours, facilitating hourly schedule management.

While preferred embodiments of the present invention have been shown and described in this specification, it will be understood by those skilled in the art that various changes or modifications of the embodiments are possible without departing from the spirit and scope of the invention as defined by the appended claims. For example, although digit elements representing the minute part of a time value are circular in the description, they may have shapes other than circles, such as squares and triangles, according to user preferences.

## Claims

1. A time display apparatus, comprising:
a digit symbol memory (110) for storing digit symbols capable of representing both numerical time values and the passage of time;
a symbol color memory (120) for storing digit color information to change with the passage of time colors of time values represented by the digit symbols;
a time counter (170) for measuring the time;
a controller (140) for selecting digit symbols suitable for display of a current time value and associated color information from the digit symbol memory (110) and symbol color memory, and for outputting a time display control signal;
an image processor (150) for generating in response to the time display control signal a current time representation image using the selected digit symbols and associated color information, and for outputting an image change signal to represent the passage of time in a time unit less than a minimum time unit for time display through the current time representation image; and
a display unit (160) for receiving the current time representation image and image change signal from the image processor (150), and displaying a current time value.

2. The time display apparatus of claim 1, wherein the digit symbol memory (110) stores the digit symbols, each digit symbol comprising a plurality of digit elements one of which is selected and changed in display states during a preset time interval.

3. The time display apparatus of claim 2, wherein the digit symbol memory (110) stores the digit symbols, each digit symbol includes 15 circular digit elements one of which is selected in sequence and changed stepwise in display color and shape during a two-second interval.

4. The time display apparatus according to one of claims 1 to 3, wherein the digit color information stored in the symbol color memory (120) comprises information regarding colors assigned to a value zone composed of multiple digit elements representing a numeric time value, assigned to a background zone composed of multiple digit elements forming a background of the value zone, and assigned to one in-progress digit element corresponding to the passage of time.

5. The time display apparatus of claim 4, wherein the digit color information stored in the symbol color memory (120) further includes information regarding colors assigned to time-elapsed and time non-elapsed portions of the value zone and to time-elapsed and time non-elapsed portions of the background zone.

6. The time display apparatus of claim 4 or 5, wherein the image processor (150) generates a current time representation image utilizing colors assigned to the value zone and background zone to represent a current minute value, and outputs a first image change signal to change a color and a shape of a current digit element using colors assigned thereto and a number of variant images.

7. The time display apparatus according to one of claims 4 to 6, wherein the digit color information stored in the symbol color memory (120) further includes information regarding an exact minute color to represent a commencing second of a current minute value for indicating changes of minutes.

8. The time display apparatus of claim 7, wherein the image processor (150) generates a current time representation image utilizing colors assigned to the value zone and background zone to represent a current minute value, outputs a second image change signal to change a color of a current digit element using colors assigned thereto and to change shapes of all digit elements representing a current minute value using a number of variant images, and outputs a third image change signal in the event of a change in the minute to display colors of all digit elements representing a current minute value using exact minute colors.

9. The time display apparatus of one of claims 4 to 8, wherein the digit color information is set or changed according to user selections.

10. The time display apparatus according to one of claims 1 to 9, wherein the image processor (150) generates a current time representation image having a minimum time unit of minutes, and outputs an image change signal to represent the passage of time in seconds.

11. The time display apparatus according to one of claims 1 to 10, further comprising an hour color memory for storing hour color information regarding colors assigned to hours.

12. A time display method, comprising the steps of:
storing digit symbols (S105) representing numerical time values and the passage of time;
storing digit color information (S110) to change with the passage of time, colors of time values represented by the digit symbols;
measuring the current time (S120);
selecting digit symbols suitable for display of a current time value from the stored digit symbols and associated color information from the stored digit color information;
generating a current time representation image for a current time display using the selected digit symbols and associated color information;
outputting an image change signal to represent the passage of time in a time unit less than a minimum time unit for time display through the current time representation image; and
displaying (S125) a current time value based on the current time representation image and image change signal.

13. The time display method of claim 12, wherein each stored digit symbol includes a plurality of digit elements one of which is selected and changed in display states during a preset time interval.

14. The time display method of claim 13, wherein each stored digit symbol includes 15 circular digit elements one of which is selected and changed in display color and shape during a two-second interval.

15. The time display method according to one of claims 12 to 14, wherein the storing digit color information (S105) step further comprises adding first information to the digit color information, the first information related to colors assigned to a value zone composed of multiple digit elements representing a numeric value, to a background zone composed of multiple digit elements forming a background of the value zone, and to one in-progress digit element corresponding to the progress of time.

16. The time display method of claim 15, wherein the storing digit color information step (125) further comprises adding second information to the digit color information, the second information related to colors assigned to time-elapsed and time non-elapsed portions of the value zone and to time-elapsed and time non-elapsed portions of the background zone.

17. The time display method of claim 15 or 16, wherein the generating step further comprises generating a current time representation image representing a current minute value using colors assigned to the value zone and background zone.

18. The time display method of claim 17, wherein the outputting step comprises outputting a first image change signal to change a color and shape of a current digit element using colors assigned thereto and a number of variant images.

19. The time display method of claim 16, wherein the storing digit color information step further comprises adding third information to the digit color information, the third information related to an exact minute color to represent the commencing second of a current minute value for indicating a change of a minute.

20. The time display method of claim 19, wherein the generating step further comprises generating a current time representation image representing a current minute value using colors assigned to the value zone and background zone.

21. The time display method of claim 19, wherein the outputting step comprises outputting a second image change signal to change a color of a current in-progress digit element using colors assigned thereto and to change shapes of all digit elements representing a current minute value using a number of variant images, and outputting a third image change signal in the event of changes of minutes to display colors of all digit elements representing a current minute value using exact minute colors.

22. The time display method of one of claims 15 to 21, wherein the digit color information is set or changed according to user selections.

23. The time display method according to one of claims 12 to 22, wherein the generating step further comprises generating a current time representation image having a minimum time unit of minutes by an image processor (150), and the outputting step further comprises outputting an image change signal by the image processor (150) to represent the passage of time in seconds.
